(19) Europäisches Patentamt
European Patent Office
Office européen des brevets

(11) Veröffentlichungsnummer: **0 218 812 B1**

(12) # EUROPÄISCHE PATENTSCHRIFT

(45) Veröffentlichungstag der Patentschrift: **01.07.92**

(51) Int. Cl.5: **C08G 18/54**, C08G 18/80, C08G 18/83, C08G 18/10, C08G 14/12, C09D 5/44

(21) Anmeldenummer: **86109854.9**

(22) Anmeldetag: **17.07.86**

(54) **Verfahren zur Herstellung von selbstvernetzenden kationischen Lackbindemitteln.**

(30) Priorität: **16.09.85 AT 2689/85**
**18.09.85 AT 2712/85**
**25.09.85 AT 2786/85**
**27.06.86 AT 1743/86**

(43) Veröffentlichungstag der Anmeldung:
**22.04.87 Patentblatt 87/17**

(45) Bekanntmachung des Hinweises auf die Patenterteilung:
**01.07.92 Patentblatt 92/27**

(84) Benannte Vertragsstaaten:
**BE CH DE FR GB IT LI NL SE**

(56) Entgegenhaltungen:
**DE-A- 2 145 387**
**DE-A- 2 711 385**

(73) Patentinhaber: **Vianova Kunstharz Aktiengesellschaft**

**A-8402 Werndorf(AT)**

(72) Erfinder: **Gmoser, Johann**
**Radegunderstrasse 30**
**A-8045 Graz(AT)**
Erfinder: **Paar, Willibald, Dr.**
**Richard Wagnergasse 46**
**A-8010 Graz(AT)**
Erfinder: **Hönel, Michael, Dr.**
**Humboldtstrasse 51**
**A-8010 Graz(AT)**

**EP 0 218 812 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von selbstvernetzenden, nach Protonierung wasserverdünnbaren kationischen Lackbindemitteln auf der Basis von Harnstoff- und Urethangruppen aufweisenden Reaktionsprodukten aus modifizierten Phenolen und Monoepoxidharzen.

Aus der DE-OS 23 20 301 sind Lackbindemittel bekannt, welche durch Umsetzung von MANNICH-Basen (aus kondensierten Phenolen, sekundären Alkanolaminen und Formaldehyd) und einem Epoxidharz erhalten werden. Ähnliche Bindemittel sind auch in der DE-OS 24 19 179 beschrieben.

Wie in der DE-OS 27 11 385 ausgeführt wird, haben diese Systeme den Nachteil, daß beim Einbrennen Amine abgespalten werden. Es wird daher vorgeschlagen, ein MANNICH-Kondensationsprodukt aus einem Phenol und/oder Alkylphenol, einem primären Amin und Formaldehyd einzusetzen.

Ein weiterer Vorschlag, die Produkte gemäß DE-OS 23 20 301 usw. zu verbessern, wird in der DE-OS 27 11 425 gemacht, wonach diesen Bindemitteln wasserunlösliche urethangruppenhaltige Harze, insbesonders von modifizierten Polyamidaminharzen, zugemischt werden.

Zur Vermeidung der Aminabspaltung wird in der DE-AS 25 41 801 vorgeschlagen, die MANNICH-Base mit einem Epoxidharz auf der Basis von mehrwertigen Alkoholen, dessen Hydroxylgruppen mit halbblockierten Diisocyanaten umgesetzt sind, und gegebenenfalls einem urethangruppenfreien Epoxidharz zu reagieren. Ein ähnliches Verfahren ist auch in der DE-OS 25 54 080 beschrieben.

In allen diesen Fällen dient die Umsetzung mit den Isocyanaten der Unterdrückung der Aminabspaltung beim Einbrennen.

Die bisher bekannten Produkte auf dieser Basis können jedoch die Ansprüche der Automobilindustrie bezüglich der Korrosionsfestigkeit bei Vernetzungstemperaturen von 150 bis 170 °C bzw. der Haftfestigkeit der eingebrannten Filme, insbesonders die Haftung der Folgeschichten, nicht befriedigen.

Es wurde nun gefunden, daß diese Forderungen erfüllt werden können, wenn durch geeignete Auswahl der Ausgangsmaterialien und bestimmte Verfahrensschritte ein gezielter Einbau von modifizierten Harnstoffgruppen und Urethangruppen erfolgt.

In der EP-B1-0209857 wird ein Verfahren zur Herstellung von selbstvernetzenden, nach Protonierung wasserverdünnbaren, kationischen Lackbindemitteln auf der Basis von Reaktionsprodukten aus substituierten Harnstoff-Phenol-Formaldehyd-Kondensaten und Epoxidharzen beschrieben, wobei

(A) ein durchschnittlich mindestens eine NH-Gruppe pro Molekül aufweisendes Aminoalkylierungsprodukt aus Phenol und /oder einem substituierten Phenol, vorzugsweise Monoalkyl- oder Monoaryl- oder Monoaralkylphenol mit einer oder gegebenenfalls zwei phenolischen Hydroxylgruppen, einem primären Alkylamin und/oder primären Alkanolamin und/oder Alkylendiamin und Formaldehyd oder einer formaldehydabspaltenden Verbindung mit einem halbblockierten Diisocyanat oder

(A1)ein halbblockiertes Diisocyanat mit einem primären Alkylamin und/oder primären Alkanolamin und/oder Alkylendiamin und der entstehende substituierte Harnstoff mit Formaldehyd oder einer formaldehydabspaltenden Verbindung und Phenol und/oder einem substituierten Phenol, vorzugsweise Monoalkyl- oder Monoaryl- oder Monoaralkylphenol mit einer oder gegebenenfalls zwei phenolischen Hydroxylgruppen umgesetzt wird und in einer weiteren Reaktionsstufe

(B) 50 bis 100 % der phenolischen Hydroxylgruppen mit Epoxidverbindungen, vorzugsweise Diepoxidharzen mit einem Epoxidäquivalentgewicht zwischen 50 und 2000, reagiert werden.

Es wurde nun gefunden, daß man selbstvernetzende Bindemittel mit ausgezeichneten lacktechnischen Eigenschaften erhält, wenn man in der Stufe (B) dieses Verfahrens Monoepoxidverbindungen einsetzt und anschließend die dabei gebildeten oder bereits vorhandenen aliphatischen Hydroxylgruppen mit Diisocyanaten und/oder Polyisocyanaten umsetzt.

Die Erfindung betrifft demgemäß ein Verfahren zur Herstellung von selbstvernetzenden, nach Protonierung wasserverdünnbaren kationischen Lackbindemitteln auf der Basis von Reaktionsprodukten aus substituierten Harnstoff-Phenol-Formaldehyd-Kondensaten und Monoepoxidverbindungen, welches dadurch gekennzeichnet ist, daß man

(A) ein durchschnittlich mindestens eine NH-Gruppe pro Molekül aufweisendes Aminoalkylierungsprodukt aus Phenol und /oder einem substituierten Phenol, einem primären Alkylamin und/oder primären Alkanolamin und/oder Alkylendiamin und Formaldehyd oder einer formaldehydabspaltenden Verbindung mit einem halbblockierten Diisocyanat oder

(A1)ein halbblockiertes Diisocyanat mit einem primären Alkylamin und/oder primären Alkanolamin und/oder Alkylendiamin und den entstehenden substituierten Harnstoff mit Formaldehyd oder einer formaldehydabspaltenden Verbindung und Phenol und/oder einem substituierten Phenol umsetzt und in einer weiteren Reaktionsstufe

(B) 50 bis 100 % der phenolischen Hydroxylgruppen mit Monoepoxidverbindungen reagiert und

(C) anschließend 50 bis 100 Mol % der durch die Reaktion des Monoepoxides freigesetzten aliphatischen Hydroxylgruppen mit äquivalenten Mengen eines Di- und/oder Polyisocyanates umsetzt.

Die Erfindung betrifft weiters die nach diesem Verfahren hergestellten Lackbindemittel und deren Verwendung in wasserverdünnbaren Lacken, insbesonders in kathodisch abscheidbaren Elektrotauchlacken.

Die Herstellung der für das erfindungsgemäße Verfahren geeigneten Aminoalkylierungsprodukte von Phenolen erfolgt nach den üblichen literaturbekannten Methoden (HOUBEN-WEYL, Methoden der organischen Chemie, Band XI/1 (1957). Die Kondensation von Harnstoffen mit Phenol und Formaldehyd wird beispielsweise in HOUBEN-WEYL, Band XIV/2 (1963) beschrieben.

In beiden Verfahrensweisen werden als Phenole dabei vorzugsweise mehrkernige Phenole z. B. die verschiedenen Diphenylolalkane, wie das Bis-(4-hydroxyphenyl-)-methan oder das 2,2-Bis-(4-hydroxyphenyl-)-propan oder niedermolekulare Phenolnovolake eingesetzt. Einkernige Phenole können jedoch ebenfalls verwendet werden. Bevorzugtes Phenol ist das 2,2-Bis-(4-hydroxy-phenol)-propan (Bisphenol A).

Als primäre Amine können mono-prim. Amine, wie Butylamin oder dessen Isomeren und Homologen, prim. Alkanolamine, wie Monoethanolamin oder dessen Homologen, primär-tertiäre Diamine, wie Dialkylaminoalkylamine, z. B. Dimethylaminoethylamin oder Diethylaminopropylamin, oder diprimäre Amine, wie Ethylendiamin und seine Homologen, eingesetzt werden. Neben den Alkylendiaminen können auch Diamine eingesetzt werden, welche eine durch Ethergruppen oder Aminogruppen unterbrochene Kohlenstoffkette aufweisen. Beispiele für brauchbare Verbindungen dieser Art sind das 4,7-Dioxadecan-1,10-diamin, das 7-Methyl-4,10-dioxatridecan-1,13-diamin oder Polyoxyalkylendiamine der Formel

$$H_2N - (CH_2 - \overset{R}{\overset{|}{C}H} - O)_n - \overset{R}{\overset{|}{C}H} - CH_2 - NH_2$$

wobei R = H oder $CH_3$ und n = 1 - 30 sein kann.

Gegebenenfalls können auch höherfunktionelle Amine vom Typ des Diethylen- oder Dipropylentriamins bzw. des Polyoxypropylentriamins oder N,N'-Bis-(3-amino-propyl)-ethylendiamins eingesetzt werden. Bei Verwendung höherfunktioneller Amine ist naturgemäß im weiteren Verlauf der Umsetzungen, die Auswahl der Komponenten und der Reaktionsbedingungen besonders sorgfältig zu wählen, um eine Gelierung des Ansatzes zu vermeiden. Insbesondere ist bei Verwendung von höherfunktionellen Aminen die Menge des halbblockierten Diisocyanates auf die Zahl der NH-Funktionen abzustimmen. Überdies finden in diesem Fall vorzugsweise einkernige Phenole Verwendung.

Es war dabei überraschend, daß auch bei Verwendung eines difunktionellen Amins bei der Harnstoffbildung bzw. der Aminoalkylierung weitgehend einheitliche Umsetzungsprodukte erhalten werden, mit welchen die weiteren Umsetzungen in einwandfreier Weise durchgeführt werden können.

Als Formaldehyd wird bevorzugt Paraformaldehyd in der handelsüblichen Form mit einem Formaldehydgehalt von 80 % und mehr eingesetzt.

In der bevorzugten Ausführungsform der Verfahrensweise (A) erfolgt die Aminoalkylierung in der Weise, daß man die Komponenten in Gegenwart eines mit Wasser ein Azeotrop bildenden Lösemittels, wie Toluol oder einem entsprechenden Benzinkohlenwasserstoff, unter Berücksichtigung einer eventuellen Exothermie auf die für die azeotrope Entfernung des Reaktionswassers notwendige Temperatur erwärmt.

Nach Abtrennung der berechneten Wassermenge wird das Kreislaufmittel unter Vakuum entfernt und das Reaktionsprodukt in einem aprotischen Lösemittel gelöst. Gegebenenfalls können die weiteren Reaktionen auch in Anwesenheit des Kreislaufmittels erfolgen.

Das so erhaltene Reaktionsprodukt, welches pro Molekül durchschnittlich mindestens eine sekundäre Aminogruppe aufweist, wird in der nächsten Stufe bei 30 bis 50 °C mit einem halbblockierten Diisocyanat umgesetzt, wobei für jede NH-Gruppe 1 Mol der Isocyanatverbindung zum Einsatz kommt. Durch die Umsetzung der NH-Gruppen mit den halbblockierten Diisocyanaten werden die erwünschten Harnstoffgruppierungen gebildet. Gegebenenfalls vorhandene Hydroxylgruppen werden dabei aufgrund der bevorzugten Reaktion zwischen NH- und NCO-Gruppen nur in vernachlässigbarem Umfang in die Reaktion einbezogen.

Die halbblockierten Diisocyanate werden in bekannter Weise hergestellt, wobei vorzugsweise solche Diisocyanate, deren NCO-Gruppen verschiedene Reaktivität aufweisen, wie Toluylendiisocyanat oder Isophorondiisocyanat, verwendet werden.

Als Blockierungsmittel dienen bevorzugt aliphatische Monoalkohole, welche - gegebenenfalls in Gegenwart der üblichen Katalysatoren - unter den Einbrennbedingungen abgespalten werden. Andere Blockierungsmittel sind beispielsweise Phenole, Oxime, Amine, ungesättigte Alkohole, Caprolactam, etc.

Bei der Verfahrensweise (A1) wird in erster Stufe aus dem halbblockierten Diisocyanat und dem primären Amin ein substituierter Harnstoff gebildet. Dazu wird der Lösung des Amine bzw. der Mischung verschiedener Amine in einem isocyanatinerten Lösemittel, wie Toluol oder einem Glykoldiether das halbblockierte Diisocyanat unter Kühlung bei 30 bis 60 ° C zugegeben und die Reaktion bis zu einem Isocyanatwert von ca. 0 weitergeführt. Anschließend wird bei 70 ° C der Formaldehyd, vorzugsweise in Form des Paraformaldehyds, zugegeben und die Temperatur etwa 1 Stunde gehalten. Nach Zugabe des Phenols wird bei steigender Temperatur zwischen 80 und 140 ° C das Reaktionswasser mit Hilfe eines Schleppmittels, vorzugsweise Toluol durch azeotrope Destillation entfernt. Gegebenenfalls wird das Schleppmittel anschließend unter Vakuum entfernt und der Ansatz in einem hydrophilen Lösemittel gelöst.

In der Stufe (B) werden die nach dem Verfahren (A) bzw. (A1) hergestellten Reaktionsprodukte mit Monoepoxidverbindungen unter Bildung von Phenolethern umgesetzt. Als Epoxidverbindungen werden dabei Glycidylether, wie Butyl-, Phenyl- oder Allylglycidylether oder Kohlenwasserstoffoxide wie Olefinoxide

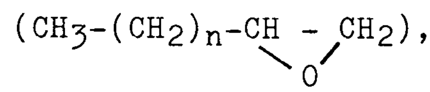

Octylenoxid

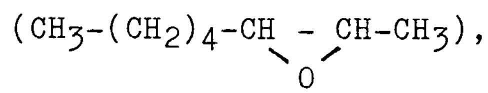

Styroloxid oder Cyclohexenvinylmonoxid, Glycidylester von Carbonsäuren, wie Glycidylmethacrylat sowie Ethylen- oder Propylenoxid eingesetzt. Besonders bevorzugt für die erfindungsgemäße Ausführungsform des Verfahrens sind die Glycidylester von KOCH-Säuren, insbesonders die handelsüblichen Glycidylester von tert. $C_9$-$C_{11}$-Monocarbonsäuren. Die Umsetzung erfolgt bei 80 bis 130 ° C, bis zu einem Epoxidwert von praktisch 0.

Es hat sich gezeigt, daß die in dieser Stufe erhaltenen Zwischenprodukte, wie auch die daraus hergestellten Endprodukte, praktisch keine Unterschiede aufweisen, gleichgültig ob das zur Anwendung kommende Vorprodukt nach der Methode (A) oder (A1) hergestellt wurde. Es muß daher angenommen werden, daß in beiden Fällen Produkte entstehen, die den gleichen Grundaufbau im Sinne der Formel

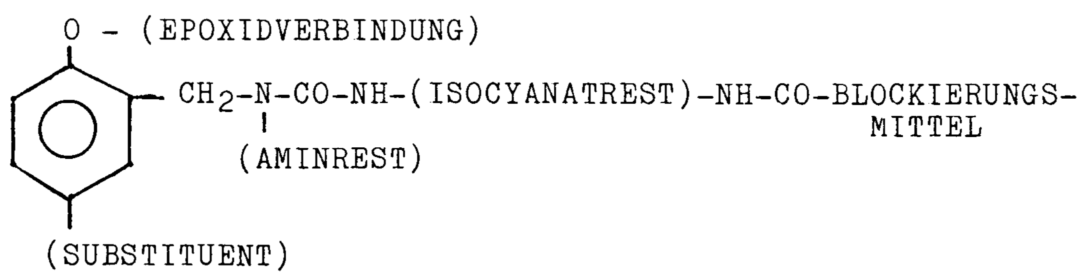

aufweisen.

Als Di- bzw. Polyisocyanate zur Verknüpfung der gemäß Stufe (B) erhaltenen Reaktionsprodukte können alle verfügbaren Produkte dieser Verbindungsklasse eingesetzt werden. Als besonders geeignet haben sich Toluylendiisocyanat, Isophorondiisocyanat, Hexamethylendiisocyanat, Trimethylhexamethylendisocyanat u.a. oder Umsetzungsprodukte von Diolen oder Polyolen mit Diisocyanaten im Molverhältnis von 1 : n, wobei n die Anzahl der Hydroxylgruppen ist, erwiesen. Als Polyisocyanate sind somit auch Umsetzungsprodukte von Trimethylolpropan mit der entsprechenden Menge Toluylendiisocyanat etc. einsetzbar. Die Umsetzung mit den Di- bzw. Polyisocyanaten erfolgt bei 50 bis 100 ° C unter langsamer Zugabe der Isocyanatverbindung. Die Reaktion wird bis zur vollständigen Umsetzung aller NCO-Gruppen geführt. Vorzugsweise erfolgt die Reaktion in Gegenwart aprotischer Lösemittel.

Die Isocyanatverbindungen werden in der Stufe (C) in einer Menge eingesetzt, daß 50 bis 100 Mol% der bei der Ringöffnung der Glycidylgruppe der Monoepoxidverbindung entstandenen aliphatischen Hydroxylgruppen umgesetzt werden.

Bei der Formulierung der Ansätze ist darauf zu achten, daß die Endprodukte die erforderliche Basizität

aufweisen, um eine ausreichende Stabilität der wäßrigen Lösung des Bindemittels zu gewährleisten. Die Einführung dieser vorzugsweise auf tertiären Aminogruppen beruhenden Basiszität, entsprechend einer Aminzahl von mindestens 30 mg KOH/g, kann einerseits durch Verwendung von primär-tertiären Diaminen bei der Aminoalkylierung oder andererseits durch Einsatz von entsprechenden Aminen als Blockierungsmittel für die Halbblockierung der Diisocyanate erfolgen.

Zur Erzielung der Wasserverdünnbarkeit werden die basischen Gruppen des Reaktionsproduktes mit Säuren, vorzugsweise mit Ameisensäure, Essigsäure oder Milchsäure, partiell oder vollständig neutralisiert. Für eine praxisgerechte Verdünnbarkeit genügt dafür üblicherweise eine Neutralisation von 20 - 60 % der basischen Gruppen oder eine Menge von ca.20 bis 60 Millimol Säure pro 100 g Festharz. Die Bindemittel werden dann mit deionisiertem Wasser auf die gewünschte Konzentration verdünnt;gegebenenfalls werden sie vor der Neutralisation oder vor der Verdünnung oder im teilverdünnten Zustand mit Vernetzungskatalysatoren, Pigmenten, Füllstoffen und anderen Zusatzstoffen zu pigmentierten Lacken verarbeitet.

Die Formulierung solcher Lacke sowie deren Verarbeitung im Elektrotauchlackierverfahren sind dem Fachmann bekannt und in der Literatur beschrieben. Die Härtung der abgeschiedenen Überzüge erfolgt beim Einsatz als Grundierung bei Temperaturen zwischen 150 und 170 °C während 10 bis 30 Minuten. Soferne die Bindemittel nicht in ausreichendem Maße selbstvernetzende Strukturen aufweisen, können auch zusätzliche Vernetzungsmittel, wie blockierte Isocyanate oder Aminoharze bzw. Phenolharze, mitverwendet werden.

In einer besonderen Ausführungsform wird den Bindemitteln eine Polyhydroxylverbindung zugemischt. Diese kann sowohl wasserlöslich oder weitgehend wasserunlöslich sein und weist ein Hydroxyläquivalentgewicht von höchstens 1000, vorzugsweise 100 bis 400, auf. (Als Hydroxyläquivalentgewicht wird die Menge Festsubstanz (in Gramm) bezeichnet, in welcher ein Mol Hydroxylgruppen enthalten ist.)

Durch diese Maßnahme wird sowohl die für die Vernetzung der Produkte wichtige Hydroxylbilanz verbessert, als auch eine weitere Möglichkeit der Beeinflussung des Abscheideverhaltens und der Filmeigenschaften angeboten.

Die Mischungen können zwischen 5 und 80 Gew.-%, vorzugsweise 10 bis 50 Gew.-% dieser Zumischkomponente (bezogen auf Festharz) enthalten.

Als wasserlösliche Polyhydroxylkomponenten kommen vorzugsweise protonierte Epoxidharz-Amin-Addukte sowie deren Modifizierungsprodukte zur Verwendung. Produkte dieser Art sind aus der einschlägigen Literatur in breitem Umfang bekannt. Eine Beschränkung dieser Auswahl ist im wesentlichen nur durch das vorgegebene Hydroxyläquivalentgewicht gegeben. Insbesonders bei der Formulierung von Elektrotauchlackbindemitteln wird höhermolekularen, sowohl durch Protonierung wasserverdünnbar gemachten als auch nicht wasserverdünnbaren, mit dem Basisharz verträglichen Materialien der Vorzug gegeben.

Zu den letzteren zählen neben monomeren Polyolen mit beschränkter Wasserlöslichkeit, wie Trimethylolethan oder -propan oder Pentaerythrit entsprechende Hydroxyläquivalentgewichte aufweisende entfunktionalisierte Phenole, wie Umsetzungsprodukte von Bisphenol A mit Ethylen- oder Propylenoxid, entsprechend entfunktionalisierte Phenolnovolake, weiters Epoxidharzester, Epoxidharz-Amin-Addukte mit einer auch nach Protonierung weitgehenden Unlöslichkeit in Wasser,sowie Hydroxylgruppen tragende Polyurethane, Polyamide oder Copolymere, beispielsweise die handelsüblichen Copolymere aus ungesättigten Alkoholen und Styrol.

Die Zumischung dieser Komponenten erfolgt gegebenenfalls bei mäßig erhöhter Temperatur, wobei insbesonders die wasserunlöslichen Komponenten vorteilhafterweise vor der Protonierung bzw. Verdünnung des Basisharzes eingearbeitet werden. Die Produkte können bei entsprechender Formulierung auch durch andere Verfahren, wie Tauchen, Walzen oder Spritzen aufgebracht werden. Gegebenenfalls können die Bindemittel auch in organischen Lösemitteln verarbeitet werden.

Die folgenden Beispiele erläutern die Erfindung, ohne sie in ihrem Umfang zu beschränken. Alle Angaben in Teilen oder Prozenten beziehen sich, soferne nichts anderes angegeben ist, auf Gewichtseinheiten.

Beispiel 1: In einem geeigneten Reaktionsgefäß werden 228 Tle Bisphenol A (1 Mol) mit 260 Tlen Diethylaminopropylamin (2 Mol) und 66 Tlen Paraformaldehyd 91 % (2 Mol) in Gegenwart von 131 Tlen Toluol als Azeotropschleppmittel bei 90 bis 130 °C bis zur Abtrennung von 42 Tlen Reaktionswasser umgesetzt. Nach Zugabe von 152 Tlen Diethylenglykoldimethylether und Kühlen auf 30 °C werden innerhalb 45 Minuten 608 Tle (2,0 Mol) eines mit 2-Ethylhexanol halbblockierten Toluylendiisocyanats zugegeben.

Sobald alle Isocyanatgruppen verbraucht sind, werden 1400 Tle dieser Lösung mit 500 Tlen (2 Mol) des Glycidylesters einer gesättigten tertiären $C_9$-$C_{11}$-Monocarbonsäure,welcher in 300 Tlen Diethylenglykoldimethylether gelöst wurde, versetzt und bei 95 bis 100 °C bis zu einem Epoxidwert von 0 umgesetzt. Nach Kühlen auf 80 °C werden im Verlauf von 30 Minuten 210 Tle (1 Mol) Trimethylhexamethylendiisocyanat,

gelöst in 53 Tlen Diethylenglykoldimethylether zugegeben. Nach Überprüfung der Vollständigkeit der Reaktion, wird das Produkt mit 0,6 Tlen/100 g Festharz (berechnet als Metall) Dibutylzinndilaurat (oder eines anderen Zinnkatalysators) versetzt und durch Zugabe von 35 Millimol Ameisensäure / 100 g Festharz in die wasserverdünnbare Form gebracht.

Elektrisch abgeschiedene Filme, die bei 160°C eingebrannt sind, zeigen eine Methylethylketonfestigkeit von mehr als 150 Doppelhüben.

Beispiel 2: 70 Tle (Festharz) des gemäß Beispiel 1 hergestellten Reaktionsproduktes werden vor dem Zusatz des Katalysators (Dibutylzinndilaurat) und des Neutralisationsmittels mit 30 Tlen (Festharz) einer wasserunlöslichen Polyhydroxylkomponente (handelsübliches Styrol-Allylalkohol-Copolymerisat; Molekulargewicht ca. 1150, 70%ig in Diethylenglykoldimethylether; OH-Äquivalentgewicht ca. 220) gut vermischt. Anschließend wird der Ansatz mit 0,6 Tlen (berechnet als Metall) Dibutylzinndilaurat und 40 mMol Ameisensäure versetzt. Die aus dem 10%igen wäßrigen Klarlack elektrisch abgeschiedenen Lackfilme zeigen nach dem Einbrennen bei 160°C eine Methylethylketon-Festigkeit von über 150 Doppelhüben.

Beispiel 3: 440 Tle Nonylphenol (2,0 Mol) werden analog Beispiel 1 mit 260 Tlen (2,0 Mol) Diethylaminopropylamin und 116 Tlen (1,0 Mol) 1,6-Hexamethylendiamin, sowie 132 Tlen (4,0 Mol) Paraformaldehyd 91 % in Anwesenheit von 237 Tlen Toluol unter Abspaltung von 84 Tlen Reaktionswasser kondensiert. Nach Verdünnen mit 663 Tlen Toluol werden bei 40°C unter Kühlen 1248 Tle eines Monoisocyanats (aus Isophorondiisocyanat und Ethylenglykolmonoethylether) zugesetzt und anschließend 1 Stde. bei 60°C reagiert. Das Toluol wird anschließend mit Hilfe von Vakuum weitgehend abgezogen und durch Diethylenglykoldimethylether ersetzt; dabei wird der Festkörpergehalt auf 70 % eingestellt.

Der Ansatz wird mit 372 Tlen (2,0 Mol) 2-Ethylhexylglycidylether versetzt und bei 95 bis 100°C bis zum vollständigen Umsatz der Epoxidgruppen reagiert. Anschließend werden innnerhalb 30 bis 40 Minuten bei 75 bis 80°C 105 Tle (0,5 Mol) Trimethylhexamethylendiisocyanat unter Kühlen zugesetzt. Nach Ende der Zugabe ist ein NCO-Wert von praktisch 0 erreicht.

75 Tle (Festharz) dieses Bindemittels werden mit 25 Tlen (Festharz) eines Umsetzungsproduktes aus 475 Tlen (1 Val) eines Bisphenol-A-Epoxidharzes und 134 Tlen (1 Mol) Dimethylolpropionsäure (eingesetzt als 70%ige Lösung in Methoxypropanol) gemischt und mit 0,8 Tlen / 100 g Festharz Dibutylzinndilaurat und 45 mMol / 100 g Festharz Ameisensäure versetzt. Nach Verdünnen mit Wasser auf einen Festkörpergehalt von 12 % wird der Klarlack elektrisch auf einer Stahlblechkathode abgeschieden. Bei 160°C eingebrannte Filme (ca. 20 µm) zeigen eine MEK-Festigkeit von mehr als 150 Doppelhüben.

Beispiel 4: In analoger Weise werden 150 Tle (1,0 Mol) p-tert.-Butylphenol mit 204 Tlen (2,0 Mol) Dimethylaminopropylamin und 66 Tlen (2,0 Mol) Paraformaldehyd 91 % in Gegenwart von 100 Tlen Toluol bei 90 bis 130°C kondensiert, bis 42 Tle Reaktionswasser abgetrennt sind Nach Zugabe von 330 Tlen Diethylenglykoldimethylether werden bei 40°C unter Kühlen langsam 496 Tle eines mit n-Butanol halbblokkierten Toluylendiisocyanates zugegeben. 1315 Tle dieser Lösung werden mit 368 Tlen (2,0 Mol) Dodecenoxid bei 95 bis 100°C, bis zu einem Epoxidwert von 0 und anschließend bei 80°C unter Kühlen mit 222 Tlen (1,0 Mol) Isophorondiisocyanat umgesetzt.

Das Bindemittel ist nach Zugabe von 50 mMol/100 g Festharz Essigsäure wasserlöslich. Durch Zugabe von 0,6 Tlen/ 100 g Festharz Zinn (als Dibutylzinndilaurat) und Verdünnen mit deionisiertem Wasser auf einen Festkörpergehalt von 15 % wird ein Klarlack hergestellt. Auf Stahlblech elektrisch abgeschiedene Filme werden 15 Minuten bei 170°C eingebrannt und zeigen bei einer Trockenfilmstärke von ca. 20 µm eine MEK-Festigkeit von 200 Doppelhüben.

Beispiel 5: 94 Tle (1,0 Mol) Phenol werden mit 260 Tlen (2,0 Mol) Diethylaminopropylamin und 66 Tlen (2 Mol) Paraformaldehyd 91 % bei 80 bis 130°C in Anwesenheit von 120 Tlen Toluol umgesetzt, bis 42 Tle Reaktionswasser entfernt sind. Nach Zugabe von 300 Tlen Toluol werden 608 Tle (2 Mol) eines mit 2-Ethylhexanol halbblockierten Toluylendiisocyanats bei 40 bis 60°C unter Kühlen zur Reaktion gebracht. Die Reaktion mit der Monoglycidylverbindung erfolgt mit 150 Tlen (1,0 Mol) Phenylglycidylether bei 120°C. Anschließend werden 212 Tle einer 75%igen Lösung eines handelsüblichen Triisocyanates hergestellt aus Trimethylolpropan und Toluylendiisocyanat ( 1 NCO-Äquivalent) bei 80 bis 100°C innerhalb einer Stunde zugegeben. Nach Ende der Zugabe resultiert ein Produkt, welches keine freien Isocyanatgruppen aufweist.

Ein Klarlack wird durch Zugabe von 0,8 Tlen/100 g Festharz Zinn (als Dibutylzinndilaurat), 55 mMol/100 g Festharz Ameisensäure und deionisiertem Wasser zur Erzielung eines Festkörpergehaltes von 15 % hergestellt. Ein kathodisch abgeschiedener und 20 Minuten bei 170°C eingebrannter Film zeigt eine MEK-Festigkeit von ca. 150 Doppelhüben.

Die Beispiele 6 und 7 entsprechen Harzzusammensetzungen, bei welchen die Vorprodukte nach der Verfahrensvariante (A1) hergestellt werden.

Beispiel 6: 260 Tle Diethylaminopropylamin (2 Mol) werden in 280 Tlen Toluol bei 30 bis 60°C unter Kühlung mit 608 Tlen eines mit 2-Ethylhexanol halbblockierten Diisocyanates (2 Mol) bis zum vollständigen

Umsatz der NCO-Gruppen reagiert. Nach Zugabe von 66 Tlen Paraformaldehyd, 91 %, (2 Mol) wird die Mischung 1 Stunde bei 70 ° C gehalten. Anschließend werden 228 Tle Bisphenol A (1 Mol) zugegeben und bei 80 bis 140 ° C durch azeotrope Destillation mit Hilfe von Toluol als Schleppmittel ca. 40 Tle Reaktionswasser entfernt.

1400 Tle dieser Lösung werden mit 500 Tlen (2 Mol) des Glycidylesters einer gesättigten tertiären $C_9$-$C_{11}$-Monocarbonsäure, welche in 300 Tlen Diethylenglykoldimethylether gelöst wurden, versetzt und bei 95 bis 100 ° C bis zu einem Epoxidwert von 0 umgesetzt. Nach Kühlen auf 80 ° C werden im Verlauf von 30 Minuten 210 Tle (1 Mol) Trimethylhexamethylendiisocyanat, gelöst in 53 Tlen Diethylenglykoldimethylether zugegeben. Nach Überprüfung der Vollständigkeit der Reaktion, wird das Produkt mit 0,6 Tlen/100 g Festharz (berechnet als Metall) Dibutylzinndilaurat (oder eines anderen Zinnkatalysators) versetzt und durch Zugabe von 35 Millimol Ameisensäure / 100 g Festharz in die wasserverdünnbare Form gebracht.

Elektrisch abgeschiedene Filme, die bei 160 ° C eingebrannt sind, zeigen eine Methylethylketonfestigkeit von mehr als 150 Doppelhüben.

Beispiel 7: Ein Gemisch aus 260 Tlen Diethylaminopropylamin (2 Mol) und 116 Tlen 1,6-Hexamethylendiamin (1 Mol) wird in 875 Tlen Toluol gelöst und bei 30 bis 50 ° C unter Kühlung portionsweise mit 1248 Tlen eines mit Ethylenglykolmonomethylether halbblockierten Isophorondiisocyanates versetzt. Die Temperatur von 50 ° C wird gehalten, bis ein NCO-Wert von 0 erreicht ist. Die Temperatur wird dann auf 70 ° C erhöht und bei dieser Temperatur 132 Tle Paraformaldehyd, 91 %, (4 Mol) zugesetzt. Die Temperatur wird 1 Stunde gehalten und anschließend 440 Tle Nonylphenol (2 Mol) zugegeben. Anschließend wird bei einer Temperatur von 80 bis 140 ° C eine Azeotropdestillation durchgeführt, bis 84 Tle Reaktionswasser abetrennt sind. Nach Abdestillieren des Toluols unter Vakuum wird der Festkörpergehalt mit Diethylenglykoldimethylether auf 70 % eingestellt.

Der Ansatz wird mit 372 Tlen (2,0 Mol) 2-Ethylhexylglycidylether versetzt und bei 95 bis 100 ° C bis zum vollständigen Umsatz der Epoxidgruppen reagiert. Anschließend werden innerhalb 30 bis 40 Minuten bei 75 bis 80 ° C 105 Tle (0,5 Mol) Trimethylhexamethylendiisocyanat unter Kühlen zugesetzt. Nach Ende der Zugabe ist ein NCO-Wert von praktisch 0 erreicht.

75 Tle (Festharz) dieses Bindemittels werden mit 25 Tlen (Festharz) eines Umsetzungsproduktes aus 475 Tlen (1 Val) eines Bisphenol-A-Epoxidharzes und 134 Tlen (1 Mol) Dimethylolpropionsäure (eingesetzt als 70%ige Lösung in Methoxypropanol) gemischt und mit 0,8 Tlen / 100 g Festharz Dibutylzinndilaurat und 45 mMol / 100 g Festharz Ameisensäure versetzt. Nach Verdünnen mit Wasser auf einen Festkörpergehalt von 12 % wird der Klarlack elektrisch auf einer Stahlblechkathode abgeschieden. Bei 160 ° C eingebrannte Filme (ca. 20 µm) zeigen eine MEK-Festigkeit von mehr als 150 Doppelhüben.

Herstellung und Prüfung pigmentierter Lacke auf Basis der erfindungsgemäß hergestellten Bindemittel

Gemäß den Angaben in der Tabelle 1 wurden pigmentierte Lacke hergestellt und in üblicher Weise auf gereinigte, zinkphosphatierte Stahlbleche elektrisch abgeschieden, wobei das Blech als Kathode geschaltet wurde. Die Bedingungen wurden so gewählt, daß nach dem Einbrennen (15 Minuten bei 170 ° C) ein Film von 20 µm Stärke resultierte.

Die Korrosionsfestigkeit der Bleche wurde im Salzsprühtest gemäß ASTM B 117-73 geprüft. Weitere Prüfungen betrafen den Gitterschnitt (nach DIN 53 151) bzw. den Dornbiegetest (nach DIN 53 152). Die Ergebnisse sind in der Tabelle 2 zusammengefaßt.

Tabelle 1

| Lack | Bindemittel Beispiel | Bindemittel Farbpaste | Pigment-Bindemittelverhältnis (Lack) | Katalysator (1) | Neutralisation (2) | Lackfestkörper (3) |
|---|---|---|---|---|---|---|
| A | 1 | I | 0,3 : 1 | 0,5 | 35 | 20 |
| B | 2 | I | 0,4 : 1 | 0,7 | 35 | 16 |
| C | 3 | I | 0,35 : 1 | 0,6 | 45 | 18 |
| D | 4 | II | 0,5 : 1 | 0,8 | 50 | 18 |
| E | 5 | II | 0,4 : 1 | 0,8 | 55 | 16 |
| F | 6 | I | 0,3 : 1 | 0,5 | 35 | 20 |
| G | 7 | I | 0,35 : 1 | 0,6 | 45 | 18 |

(1) % Sn (als Dibutylzinndilaurat)
(2) mMol Ameisensäure pro 100 g Festharz
(3) % Gesamtfestkörper

Für die Farbpaste I wurde ein Harz eingesetzt, welches wie folgt hergestellt wurde:
In einem mit Rührer, Thermometer, Zugabetrichter, Wasserabscheider und Rückflußkühler ausgestatteten Reaktionsgefäß werden 440 Tle eines epoxidierten Polybutadienöls (Molekulargewicht ca. 1400, Epoxidäquivalent ca. 440) mit 92 Tlen Dimethylaminopropylamin (0,9 Mol) in Anwesenheit von 0,5 Tlen 2,6-Di-tert.-butyl-4-methyl-phenol (Inhibitor) bei 160 bis 200 °C umgesetzt, bis alle Epoxidgruppen verbraucht sind. Nach Kühlen auf 80 °C werden 30 Tle Paraformaldehyd 91 % (0,9 Mol) zugegeben und mit Spezialbenzin (Siedebereich 80 - 120 °C) bei dieser Temperatur 18 Tle Reaktionswasser azeotrop entfernt. Nach Abziehen des Schleppmittels unter Vakuum wird der Ansatz in 59 Tlen Ethylenglykolmonobutylether gelöst. Das Harz weist folgende Kennzahlen auf:

| | |
|---|---|
| Viskosität: | 2600 mPa.s / 25 °C |
| Oxazolidinäquivalent (ber.): | 604 |
| Aminzahl: | 185 mg KOH/g |
| Aliphatischer Anteil: | 80 % |
| Molekulargewicht (ber.): | 1632 |
| Löslichkeit (1) : | 25 mMol Ameisensäure pro 100 g Festharz |

(1) Zur Herstellung einer stabilen wäßrigen Dispersion notwendige Säuremenge.

Aus 100 Tlen (Festharz) des Pastenharzes, 20 Tlen einer 25%igen Lösung in EGL eines Netzmittels auf der Basis eines Acetylenalkohols, 24 Tlen Milchsäure (5N) und deionisiertem Wasser wird eine 15%ige Lösung hergestellt, welche in einer Laborperlmühle mit 24 Tlen Farbruß, 1104 Tlen Titandioxid und 72 Tlen basischem Bleisilikat vermahlen wird. (Pigment/ Bindemittel-Verhältnis 12 : 1).

Für die Farbpaste II wird als Bindemittel ein nach Protonierung wasserlösliches Harz eingesetzt, welches in folgender Weise hergestellt wurde:
500 Tle eines Epoxidharzes auf Basis von Bisphenol A (Epoxidäquivalentgewicht ca. 500) werden in 214 Tlen Propylenglykolmonomethylether gelöst und bei 110 ° C mit 83 Tlen eines Halbesters aus Phthalsäureanhydrid und 2-Ethylhexanol in Gegenwart von 0,5 g Triethylamin als Katalysator bis zu einer Säurezahl von weniger als 3 mg KOH/g reagiert. Dann werden 120 Tle eines NH-funktionellen Oxazolidins aus Aminoethylethanolamin, 2-Ethylhexyl-Acrylat und Formaldehyd, sowie 26 Tle Diethylaminopropylamin zugefügt und der Ansatz bei 80 ° C bis zu einem Epoxidwert von praktisch 0 reagiert. Der Ansatz wird mit 200 Tlen Propylenglykolmonomethylether verdünnt.

100 Tle Festharz dieser Komponente werden mit 1 Tl Farbruß, 147 Tlen Titandioxid und 12 Tlen basischem Bleisilikat verarbeitet (Pigment/Bindemittel-Verhältnis 1,6 : 1).

Tabelle 2

| Prüfergebnisse | | | |
|---|---|---|---|
| Lack | Salzsprühtest / Stden. | Gitterschnitt | Dornbiegetest mm |
| A | 750 | 2 | 8 |
| B | 1200 | 1 | 6 |
| C | 1500 | 0 | 8 |
| D | 1000 | 1 | 2 |
| E | 1000 | 0 | 5 |
| F | 750 | 2 | 8 |
| G | 1200 | 0 | 8 |

Auch bei einer Reduzierung der Einbrenntemperatur auf 160 bzw. 150 ° C (15 bis vorzugsweise 20 Minuten) verschlechtern sich die Prüfergebnisse nur unwesentlich.

**Patentansprüche**

**1.** Verfahren zur Herstellung von selbstvernetzenden, nach Protonierung wasserverdünnbaren kationischen Lackbindemitteln auf der Basis von Reaktionsprodukten aus substituierten Harnstoff-Phenol-Formaldehyd-Kondensaten und Monoepoxidverbindungen, dadurch gekennzeichnet, daß man
(A) ein durchschnittlich mindestens eine NH-Gruppe pro Molekül aufweisendes Aminoalkylierungsprodukt aus Phenol und/oder einem substituierten Phenol, einem primären Alkylamin und/oder primären Alkanolamin und/oder Alkylendiamin und Formaldehyd oder einer formaldehydabspaltenden Verbindung mit einem halbblockierten Diisocyanat oder
(A1) ein halbblockiertes Diisocyanat mit einem primären Alkylamin und/oder primären Alkanolamin und/oder Alkylendiamin und den entstehenden substituierten Harnstoff mit Formaldehyd oder einer formaldehydabspaltenden Verbindung und Phenol und/oder einem substituierten Phenol umsetzt und in einer weiteren Reaktionsstufe
(B) 50 bis 100 % der phenolischen Hydroxylgruppen mit Monoepoxidverbindungen reagiert und
(C) anschließend 50 bis 100 Mol% der durch die Reaktion des Monoepoxides freigesetzten aliphatischen Hydroxylgruppen mit äquivalenten Mengen eines Di- und/oder Polyisocyanates umsetzt.

**2.** Verfahren nach Anspruch 1, dadurch gekennzeichnet, daß man die Kondensation mit dem Phenol und/oder dem substituierten Phenol bei der für eine azeotrope Entfernung des Reaktionswassers mit Hilfe eines Schleppmittels sich einstellenden Temperatur durchführt.

**3.** Verfahren nach den Ansprüchen 1 und 2, dadurch gekennzeichnet, daß man als substituiertes Phenol in Stufe (A) oder (A1) ein Monoalkyl- oder Monoaryl- oder Monoaralkylphenol mit einer oder zwei phenolischen Hydroxylgruppe(n) einsetzt.

4. Verfahren nach den Ansprüchen 1 bis 3, dadurch gekennzeichnet, daß man als substituiertes Phenol mit zwei phenolischen Hydroxylgruppen in Stufe (A) oder (A1) Bisphenol A einsetzt.

5. Verfahren nach den Ansprüchen 1 bis 4, dadurch gekennzeichnet, daß man als Amine diprimäre Alkylamine, vorzugsweise zusammen mit primär-tertiären Alkylaminen, einsetzt.

6. Verfahren nach den Ansprüchen 1 bis 5, dadurch gekennzeichnet, daß man als Monoepoxidverbindung in Stufe (B) einen Glycidylester einer KOCH-Säure einsetzt.

7. Verfahren nach den Ansprüchen 1 bis 6, dadurch gekennzeichnet, daß man als Di- oder Polyisocyanat Umsetzungsprodukte von Diolen oder Polyolen mit Diisocyanaten im Molverhältnis von 1 : n, wobei n die Anzahl der Hydroxylgruppen ist, einsetzt.

8. Verfahren nach den Ansprüchen 1 bis 7, dadurch gekennzeichnet, daß die Produkte eine vorzugsweise auf tertiären Aminogruppen beruhende Aminzahl von mindestens 30 mg KOH/g aufweisen, welche durch ein bei der Aminoalkylierung bzw. der Harnstoffbildung in der Stufe (A) bzw. (A1) verwendetes Amin und/oder durch ein bei der Halbblockierung der Diisocyanate eingesetztes Amin bedingt ist.

9. Selbstvernetzende, nach Protonierung wasserverdünnbare kationische Lackbindemittel auf der Basis von Reaktionsprodukten aus substituierten HarnstoffPhenol-Formaldehyd-Kondensaten und Monoepoxidverbindungen, hergestellt gemäß den Ansprüchen 1 bis 8.

10. Verwendung der gemäß den Ansprüchen 1 bis 8 hergestellten Bindemittel in ofentrocknenden Lacken.

11. Verwendung der gemäß den Ansprüchen 1 bis 8 hergestellten Bindemittel in kathodisch abscheidbaren Elektrotauchlacken.

12. Verwendung der gemäß den Ansprüchen 1 bis 8 hergestellten Bindemittel, dadurch gekennzeichnet, daß man die Bindemittel in Mischungen einsetzt, welche zwischen 5 und 80 Gew.-%, vorzugsweise zwischen 10 bis 50 Gew.-%, einer wasserlöslichen und/oder weitgehend wasserunlöslichen Polyhydroxylverbindung mit einem Hydroxyäquivalentgewicht von höchstens 1000, vorzugsweise von 100 bis 400, enthalten.

**Claims**

1. Process for the preparation of self-crosslinking, after protonation water-thinnable, cationic paint binders based on the reaction products of substituted urea-phenol-formaldehyde condensates with monoepoxide compounds, characterised in that

(A) an aminoalkylation product containing on average at least one NH-group per molecule, obtained from phenol and/or a substituted phenol, a primary alkylamine and/or a primary alkanolamine and/or an alkylenediamine and formaldehyde or a compound which splits off formaldehyde, is reacted with a semiblocked diisocyanate, or

(A1) a semiblocked diisocyanate is reacted with a primary alkylamine and/or a primary alkanolamine and/or an alkylenediamine and the resultant substituted urea is reacted with formaldehyde or a compound which splits off formaldehyde and with phenol and/or a substituted phenol, and in a further reaction stage

(B) 50 to 100% of the phenolic hydroxyl groups are reacted with monoepoxide compounds, and

(C) 50 to 100 mol% of the aliphatic hydroxyl groups set free by the reaction of the monoepoxide are then reacted with equivalent amounts of a diisocyanate and/or polyisocyanate.

2. Process according to Claim 1, characterised in that the condensation with the phenol and/or the substituted phenol is carried out at a temperature suitable for an azeotropic removal of the water of reaction with the aid of an entraining agent.

3. Process according to Claims 1 and 2, characterised in that a monoalkyl or monoaryl- or monoaralkylphenol containing one or two phenolic hydroxyl group(s) is employed in stage (A) or (A1) as the substituted phenol.

4. Process according to Claims 1 to 3, characterised in that bisphenol A is used in stage (A) or (A1) as the substituted phenol containing two phenolic hydroxyl groups.

5. Process according to Claims 1 to 4, characterised in that diprimary alkylamines, preferably in conjunction with primary-tertiary alkylamines, are used as the amines.

6. Process according to Claims 1 to 5, characterised in that a glycidyl ester of a KOCH acid is used in stage (B) as the monoepoxide compound.

7. Process according to Claims 1 to 6, characterised in that the reaction products of diols or polyols with diisocyanates in the molar ratio of 1 : n, n being the number of the hydroxyl groups, are used as the diisocyanate or polyisocyanate.

8. Process according to Claims 1 to 7, characterised in that the products have an amine value, preferably based on tertiary amino groups, of at least 30 mg of KOH/g, which is derived from an amine used in stage (A) or (A1) in the aminoalkylation or urea formation and/or from an amine used in the semi-blocking of the diisocyanates.

9. Self-crosslinking, after protonation water-thinnable, cationic paint binders based on reaction products of substituted urea-phenol-formaldehyde condensates and monoepoxide compounds, prepared according to Claims 1 to 8.

10. Use of the hinders prepared according to Claims 1 to 8 in stoving paints.

11. Use of the hinders prepared according to Claims 1 to 8 in cathodically depositable electrodeposition paints.

12. Use of the hinders prepared according to Claims 1 to 8, characterised in that the binders are used in mixtures which contain between 5 and 80% by weight, preferably between 10 and 50% by weight, of a water-soluble and/or a largely water-insoluble polyhydroxyl compound having a hydroxyl equivalent weight of not more than 1000, preferably of 100 to 400.

**Revendications**

1. Procédé de préparation de liants de peintures cationiques autoréticulants, diluables à l'eau après protonation, à base de produits de réaction de condensats urée-phénol-formaldéhyde substitués et de composés monoépoxydiques, caractérisé en ce que l'on fait réagir
(A) un produit d'aminoalkylation, qui contient en moyenne au moins un groupe NH par molécule, de phénol et/ou d'un phénol substitué, d'une alkylamine primaire et/ou d'une alcanolamine primaire et/ou d'une alkylènediamine et de formaldéhyde ou d'un composé libérant du formaldéhyde, avec un diisocyanate semibloqué ou
(A1) un diisocyanate semibloqué avec une alkylamine primaire et/ou une alcanolamine primaire et/ou une alkylènediamine et l'urée substituée formée avec le formaldéhyde ou un composé libérant du formaldéhyde et le phénol et/ou un phénol substitué, et dans une seconde étape réactionnelle
(B) on fait réagir 50 à 100% des groupes hydroxyle phénoliques avec des composés monoépoxydiques, et
(C) on fait réagir ensuite 50 à 100 mol% des groupes hydroxyles aliphatiques libérés par la réaction du monoépoxyde avec des quantités équivalentes d'un di- et/ou polyisocyanate.

2. Procédé selon la revendication 1, caractérisé en ce que l'on accomplit la condensation avec le phénol et/ou le phénol substitué à la température qui s'établit pour une élimination azéotropique de l'eau de réaction à l'aide d'un agent d'entraînement.

3. Procédé selon les revendications 1 et 2, caractérisé en ce que l'on utilise comme phénol substitué dans l'étape (A) ou (A1) un monoalkyl- ou monoaryl- ou monoaralkylphénol ayant un ou deux groupes hydroxyle phénoliques.

4. Procédé selon les revendications 1 à 3, caractérisé en ce que l'on utilise le bisphénol A comme phénol

substitué ayant deux groupes hydroxyles phénoliques dans l'étape (A) ou (A1).

**5.** Procédé selon les revendications 1 à 4, caractérisé en ce que l'on utilise comme amines des alkylamines diprimaires, de préférence en même temps que des alkylamines primaires-tertiaires.

**6.** Procédé selon les revendications 1 à 5, caractérisé en ce que l'on utilise comme composé monoépoxydique dans l'étape (a) un glycidylester d'un acide de Koch.

**7.** Procédé selon les revendications 1 à 6, caractérisé en ce que l'on utilise comme di- ou polyisocyanate des produits de réaction de diols ou de polyols avec des diisocyanates dans le rapport molaire de 1:n, n étant le nombre de groupes hydroxyles.

**8.** Procédé selon les revendications 1 à 7, caractérisé en ce que les produits présentent un indice d'amine basé sur les groupes amines tertiaires d'au moins 30 mg KOH/g qui est déterminé par une amine utilisée lors de l'aminoalkylation ou lors de la formation d'urée dans l'étape (A) ou (A1)et/ou par une amine utilisée lors du semiblocage des diisocyanates.

**9.** Liants de peintures cationiques autoréticulants, diluables à l'eau après protonation à base de produits de réaction de condensats urée-phénol-formaldéhyde substitués et de composés monoépoxydiques, préparés selon les revendications 1 à 8.

**10.** Utilisation des liants préparés selon les revendications 1 à 8 dans des peintures séchant au four.

**11.** Utilisation des liants préparés selon les revendications 1 à 8 dans des peintures pour trempage électrophorétique précipitables à la cathode.

**12.** Utilisation des liants préparés selon les revendications 1 à 8, caractérisée en ce que l'on utilise les liants dans des mélanges qui contiennent entre 5 et 80% en poids, de préférence entre 10 et 50% en poids, d'un composé polyhydroxylé hydrosoluble et/ou sensiblement insoluble dans l'eau ayant un poids d'équivalent d'hydroxyle d'au plus 1000, de préférence de 100 à 400.